# EUROPÄISCHE PATENTSCHRIFT

(11) **EP 0 648 562 B1**
(45) Veröffentlichungstag und Bekanntmachung des Hinweises auf die Patenterteilung: **23.12.1998**
(21) Anmeldenummer: 94115057.5
(22) Anmeldetag: 23.09.1994
(51) Int. Cl.: B22D 17/32, B22D 17/08, B29C 45/76

(54) **Druck- oder Spritzgiessmaschine**
Injection moulding machine or die casting machine
Presse d'injection ou une machine à coulée sous pression

(30) Priorität: 16.10.1993 DE 4335365
(43) Veröffentlichungstag der Anmeldung: 19.04.1995
(73) Patentinhaber: Müller Weingarten AG, D-88250 Weingarten (DE)
(72) Erfinder: Frey, Rolf, D-73650 Winterbach (DE); Stummer, Friedrich, Dr.-Ing., D-70736 Fellbach (DE)
(74) Vertreter: Patentanwälte Eisele, Otten & Roth

(56) Entgegenhaltungen:
- EP-A- 0 005 239
- EP-A- 0 560 589
- WO-A-93/01909
- DE-A- 3 636 936
- DE-A- 4 112 753

## Beschreibung

Die Erfindung betrifft eine Druck- oder Spritzgießmaschine nach dem Oberbegriff des Anspruchs 1 sowie ein Verfahren zur Erfassung der Schmelzefront an einer solchen Maschine nach dem Oberbegriff des Anspruchs 9.

### Stand der Technik:

Aus der DE 36 36 936 A1 ist eine Druck- oder Spritzgießmaschine nach der Gattung des Anspruchs 1 bekanntgeworden, bei welcher mehrere sensorgesteuerte Auswertkreise vorgesehen sind, die zur Steuerung oder Regelung der einzelnen Parameter der Druck- oder Spritzgießmaschine dienen. Hierfür weist diese Maschine eine Vielzahl von Sensoren auf, die sich im Antriebsaggregat für den Gießzylinder, im Gießzylinder selbst, im Angußteil sowie im Formhohlraum der Gießform befinden. Die Meßsignale dieser Sensoren dienen zur Steuerung bzw. Regelung beispielsweise der Vorfüllphase, der Formfüllphase sowie der Nachdruckphase einer metallverarbeitenden Druckgießmaschine.

Beim Verarbeiten von Metall- oder Kunststoffschmelzen in Gießformen tritt demzufolge häufig die Notwendigkeit auf, die Lage der Front des geschmolzenen Materials in der Spritz- oder Gießform zu einem bestimmten Zeitpunkt des Ablaufs des Gießprozesses zu erkennen. Kennt man die genaue Lage der Schmelzefront, können verschiedene Parameter des Gießprozesses in Abhängigkeit von dieser Lage z. B. über ein Rechnersystem gesteuert oder geregelt werden, was z. B. durch Ausgleich der Dosierungsgenauigkeit zu höherer Qualität der zu produzierenden Teile und damit zu verbesserter Wirtschaftlichkeit des Gießprozesses führt. Weiterhin kann die Lage der Schmelzefront im Zusammenhang mit der Lage des Gießkolbens Hinweise zur Dosiermengensteuerung geben.

Insbesondere zur Erfassung der Schmelzefront innerhalb des Angußkanals oder des Formhohlraumes sind aus der einleitend genannten Druckschrift Sensoren bekanntgeworden, die als Kontaktbrücke in Verbindung mit dem elektrisch leitenden metallischen Gießmaterial wirken. Solche Kontaktstifte haben den Nachteil, daß nur zuverlässig elektrisch leitende Materialien erkannt werden und zudem voreilende Tropfen oder Überbrückungsfilme zu Fehlmessungen führen.

Versuche mit Thermoelementen anstelle von Kontaktstiften haben ergeben, daß diese Ausführung weder von der Lebensdauer noch von der Meßgenauigkeit her die zu stellenden Anforderungen erfüllt.

### Vorteile der Erfindung:

Der Erfindung liegt die Aufgabe zugrunde, die Nachteile beim Stand der Technik zu vermeiden und insbesondere eine Einrichtung sowie ein Verfahren zur Erfassung der Schmelzefront bei Druck- oder Spritzgießmaschinen vorzuschlagen, die einfach und preiswert aufgebaut ist und zuverlässige Meßergebnisse liefert.

Diese Aufgabe wird durch die Merkmale der Ansprüche 1 und 9 gelöst. In den Unteransprüchen sind vorteilhafte und zweckmäßige Verbesserungen des Gegenstandes der Ansprüche 1 und 9 angegeben.

Die erfindungsgemäße Druck- oder Spritzgießmaschine hat gegenüber den bekannten Einrichtungen oder Verfahren den Vorteil, daß eine verschleißfreie und insbesondere für den rauhen Betrieb geeignete Meßeinrichtung geschaffen wird, die sehr zuverlässig arbeitet. Dabei läßt sich die Meßeinrichtung problemlos an allen Formen einer Druck- oder Spritzgießmaschine anbauen, wobei auch eine Nachrüstung der Formen ohne weiteres möglich ist. Dabei kann die Meßeinrichtung zur Erfassung der Schmelzefront derart ausgebildet sein, daß Unregelmäßigkeiten im Bewegungsablauf der Schmelzefront, z. B. ein voreilender Schmelzestrahl, eliminiert werden können und damit keinen Einfluß auf ein erforderliches Schaltsignal haben.

Die Erfindung geht von der Grunderkenntnis aus, daß die sich vorwärtsbewegende Schmelzefront in einem dünnen, einer Kapillare ähnelnden Kanal oder Spalt zu einer Beeinflußung des Mediums im Spalt führt. Beispielsweise kann ein solcher, an geeigneter Stelle angeordneter Querkanal zu einer Druckschwankung führen, die als Meßgröße zur Erfassung der Schmelzenfront dient. Die Einrichtung eines Meßkanals z. B. in der beweglichen Formenhälfte dient erfindungsgemäß dazu, daß die Schmelzefront einen solchen Meßkanal verschließt und hierdurch das gewünschte Meßsignal auslöst. Beim Entformen des Werkstücks wird der Meßkanal automatisch wieder freigemacht. Der Meßkanal befindet sich demzufolge vorzugsweise im Angußbereich der beweglichen Gießform.

In vorteilhafter Ausgestaltung der Erfindung kann der Meßkanal beispielsweise mit einer Vakuumeinrichtung versehen werden, die eine Unterdruckbeaufschlagung im Meßkanal erzeugt und ein Meßsignal durch den Verschluß des Meßkanals hervorruft.

Alternativ hierzu kann der Meßkanal zur Durchdringung mit einer insbesonderen optischen Sensoreinrichtung verwendet werden, wobei der Verschluß eines solchen Meßkanals oder Meßspaltes durch die Schmelzefront wiederum zu einer Beeinflußung der Sensorsignale führt.

Um eine möglichst rasche Erstarrung der in den Meßkanal eindringenden Schmelzefront zu erzielen, kann die Gießform eine zusätzliche Kühleinrichtung für den Meßkanal aufweisen, die mit einer Temperaturmeßeinrichtung gekoppelt sein kann.

Weitere Einzelheiten und Vorteile der Erfindung sind in der nachfolgenden Beschreibung eines Ausführungsbeispiels der Erfindung anhand der Darstellung in den Zeichnungen angegeben.

Es zeigen
- Fig. 1: eine schematische Darstellung einer Gießgarnitur einer Druckgießmaschine mit Gießform,
- Fig. 2: eine Schnittdarstellung entlang der Schnittlinie A-A in Fig. 1,
- Fig. 3: eine Schnittdarstellung entlang der Schnittlinie B-B in Fig. 2 mit einem Meßkanal mit Vakuumeinrichtung,
- Fig. 4: ein Arbeitsdiagramm der Ausführungsform nach Fig. 3 und
- Fig. 5: eine alternative Ausführungsform einer Meßeinrichtung gemäß Schnittdarstellung B-B in Fig. 2.

### Beschreibung der Erfindung:

Die Erfindung wird anhand einer metallverarbeitenden Druckgießmaschine als Ausführungsbeispiel näher beschrieben.

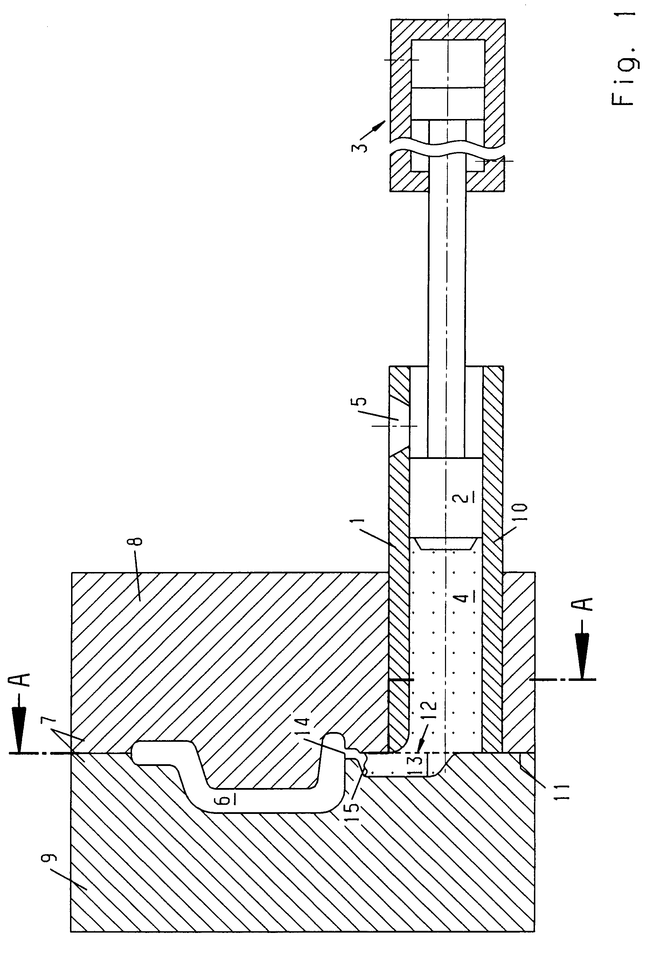

Die in der Fig. 1 enthaltene schematische Darstellung der Gießanordnung bei einer Kaltkammer-Druckgießmaschine weist eine Gießkammer 1 mit einem Gießkolben 2 auf, der durch ein Gieß-Antriebsaggregat 3 angetrieben wird. Die Metallschmelze 4 wird über eine Einfüllöffnung 5 in die Gießkammer 1 eingebracht und mittels des Gießkolbens 2 in den Formhohlraum 6 einer Druckgießform 7 eingepreßt. Die Druckgießform 7 besteht aus einer festen Formhälfte 8 sowie einer beweglichen Formhälfte 9. Die Gießkammer 1 ist mit ihrem zylindrischen Gehäuse 10 in die feste Formhälfte 8 integriert und reicht etwa bis zur Trennfläche 11 zwischen den beiden Formenhälften 8, 9 der Druckgießform 7.

Zwischen dem eigentlichen Formhohlraum 6 zur Bildung des Gußwerkstücks und dem Auslaufquerschnitt 12 der Gießkammer 1 befindet sich in der beweglichen Formhälfte 9 ein als Angußteil 13 bezeichneter Zulaufkanal für die Metallschmelze, welches als Angußstück vom fertigen Werkstück abgetrennt werden muß. Der Übergangsquerschnitt zwischen Angußteil und Formhohlraum 6 wird als Anschnitt 14 bezeichnet.

Wie auch in der eingangs erwähnten Literaturstelle beschrieben, unterscheidet man bei metallverarbeitenden Druckgießmaschinen zwischen der sogenannten Vorfüllphase, der Formfüllphase sowie der Nachdruckphase. Um eine hohe Qualität der zu erzeugenden Werkstücke zu erzielen, ist der richtige Gießprozeß zur Steuerung und Regelung dieser einzelnen Phasen von hoher Bedeutung. Die Dosiergenauigkeit der Metallschmelze innerhalb der Gießkammer 1 ist nur in bestimmten Toleranzgrößen möglich. Deshalb kann der Füllgrad der Gießkammer schwanken. Damit ist die Menge der Metallschmelze 4 innerhalb der Gießkammer 1 nicht konstant, so daß die Schmelzefront bei der Vorwärtsbewegung des Gießkolbens mit jedem Gießvorgang variieren kann.

Während der sogenannten Vorfüllphase mit dem langsamen Vorlaufhub des Gießkolbens 2 wird die Metallschmelze soweit mit langsamer Geschwindigkeit nach vorne geschoben, bis der Flüssigkeitsspiegel der Metallschmelze beispielsweise den obersten Rand der Gießkammer erreicht. Die Vorfüllphase kann sich auch bis zu dem Zeitpunkt erstrecken, bis die Metallschmelze auch den Angußkanal 13 gefüllt hat und die vorderste Schmelzefront 15 etwa im Bereich des Anschnitts 14 zwischen Angußkanal 13 und Formhohlraum 6 zu liegen kommt. Diese Stellung ist in der Fig. 1 für die Schmelzefront 15 schematisch dargestellt.

Ab diesem Zeitpunkt folgt der Vorfüllphase die sogenannte Formfüllphase mit einer stark erhöhten Geschwindigkeit des Gießkolbens 2, um den Formhohlraum 6 mit Metallschmelze 4 zu füllen. Da die Formfüllphase unter erheblich anderen Maschinenbedingungen abläuft, ist es außerordentlich wichtig, den richtigen Zeitpunkt zwischen Vorfüllphase und Formfüllphase zu erhalten. Dieser Zeitpunkt kann dadurch bei schwankenden Füllgraden der Gießkammer leicht ermittelt werden, indem die genaue Lage der Schmelzenfront 15 erfaßt wird. Gegenstand der vorliegenden Erfindung ist es deshalb, die genaue Lage der Schmelzenfront 15 an bestimmter Stelle der Gießform zu ermitteln, um hierdurch Schaltsignale zu erzeugen, die sich auf die Gießparameter unmittelbar auswirken. Weiterhin kann aufgrund der Kenntnis der genauen Lage der Schmelzefront ggf. in Verbindung mit der Lage des Gießkolbens eine Beeinflussung der Dosiermengensteuerung der Metallschmelze erfolgen.

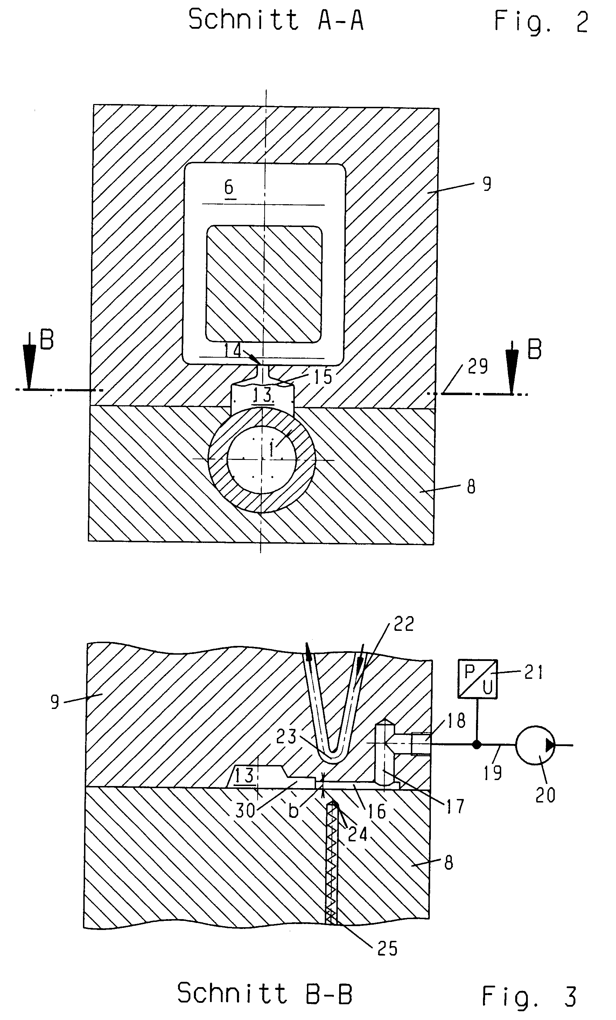

Gemäß der Darstellung der Erfindung in Fig. 2 und 3 ist im Bereich des Angußkanals 13 ein sehr schmaler Meßkanal 16 vorgesehen, der sich unterhalb des Anschnitts 14 im Angußkanal 13 in der beweglichen Formhälfte 9 befindet und über Bohrungen 17, 18 nach außen führt. Die Anschlußbohrung 18 ist mit einer Anschlußleitung 19 zum Anschluß einer Vakuumpumpe 20 versehen. Der Druck im Meßkanal 16 wird über die Bohrungen 17, 18 in der Anschlußleitung 19 über einen Druckaufnehmer 21 ermittelt. Die Stärke des Meßkanals 16 liegt in der Größenordnung von b 0,2 mm. Das in diesen Meßkanal eindringende Schmelzenmaterial erstarrt aufgrund der geringen Stärke dieses Meßkanals 16 in kürzester Zeit. Um eine beschleunigte Erstarrung des in den Meßkanal 16 eindringenden Schmelzenmaterials der Schmelzenfront zu erzielen, ist eine zusätzliche, in Fig. 3 dargestellte Kühlungsbohrung 22 in der beweglichen Formhälfte 9 vorgesehen, die mit ihrem vorderen Bereich 23 sehr nahe an den Meßkanal 16 zur Kühlung dieses Wandungsabschnittes herangeführt ist. Auf der gegenüberliegenden Seite kann sich ein Meßfühler 24 in einer Zuführbohrung 25 befinden, der die Umgebungstemperatur des Meßkanals 16 erfaßt.

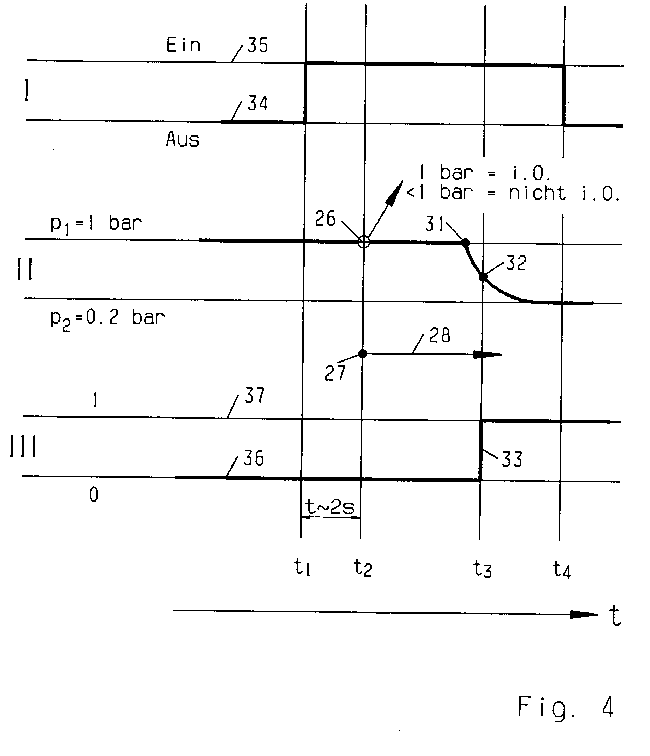

Die Wirkungsweise der Meßeinrichtung zur Erfassung der Schmelzefront wird anhand der Figuren 3 und 4 näher erläutert.

Das Diagramm nach Fig. 4 zeigt im obersten Teil mit I den Aus- und Ein-Schaltzustand 34, 35 der Vakuumpumpe 21 über die Zeit t, im mittleren Bereich mit II den am Druckaufnehmer 21 gemessenen Druckzustand und mit III den Einsatzzeitpunkt eines Schaltsignals zur Erfassung der Schmelzefront.

Gemäß der Darstellung in Fig. 3 und 4 wird nach dem Schließen der Druckgießform 7 zum Zeitpunkt t₁ mittels der Vakuumpumpe 20 ein Unterdruck an den Meßkanal 16 angelegt. Dabei arbeitet die Vakuumpumpe 20 mit einer geringen Leistung. Nach einem Zeitraum von z. B. 2 sec. (Zeitpunkt t₂) wird durch eine entsprechende Steuerung kontrolliert, ob der gesamte Meßkanal 16 tatsächlich geöffnet ist, was im Punkt 26 in Fig. 4 dargestellt ist. Liegt an dem Druckaufnehmer 21 im Zeitpunkt t₂ ein Druck von p₁ 1 bar an, so ist der Meßkanal offen und damit das System in Ordnung. Wäre der Meßkanal 16 zu diesem Zeitpunkt aufgrund von Verunreinigungen oder nicht entfernten Schmelzeresten geschlossen, so würde sich bereits jetzt ein Unterdruck, d. h. ein Druck p₁ < 1 bar einstellen, was zu einem Fehlsignal führen würde. Wird demnach zum Zeitpunkt t₂ ein Druck von p₁ < 1 bar ermittelt, ist das Meßsystem nicht in Ordnung. Es müßte deshalb bereits zu diesem Zeitpunkt t₂ kontrolliert und überprüft werden.

Ist das Kontrollsignal zum Zeitpunkt t₂ (Punkt 26) in Ordnung, so kann mit dem Vorschub des Gießkolbens in der Vorfüllphase begonnen werden. Dies ist zum Zeitpunkt t₂ mit Punkt 27 in Fig. 4 angegeben. Der Pfeil 28 zeigt die beginnende Vorfüllphase. Durch die Vorlaufbewegung des Gießkolbens 2 steigt zunächst die Metallschmelze in der Gießkammer 1 und danach wird der Angußkanal 13 mit Metallschmelze gefüllt, wobei die flüssige Metallschmelze 4 innerhalb des Angußkanals 13 bis zu der in Fig. 2 dargestellten Meßhöhe 29 ansteigt. Die Meßhöhe 29 im Angußkanal 13 kann frei gewählt werden und befindet sich etwa im Bereich des Anschnitts 14, d. h. kurz vor dem Zeitpunkt, wo die Schmelzefront 15 den Formhohlraum 6 erreicht hat. In dieser Meßhöhe 29 befindet sich der in Fig. 3 dargestellte Meßkanal 16, d. h. die Fig. 3 stellt einen Horizontalschnitt durch die beiden Formhälften 8, 9 durch den Angußkanal 13 in Meßhöhe dar. Gelangt die aufsteigende Schmelzefront in die Höhe dieses Meßkanals 16, so wird eine dem Angußkanal 13 sich anschließende kleine Meßkammer 30 mit Metallschmelze gefüllt, so daß der sich an die Meßkammer 30 anschließende Meßkanal 16 verschlossen wird. Dieses Verschließen kann durch ein teilweise Eindringen der Metallschmelze in den Meßkanal 16 erfolgen. Durch die geringe Stärke des Meßkanals als Entlüftungsnut von z. B. nur b 0,2 mm, erstarrt die Schmelze außerordentlich schnell in diesem Meßkanal. Dieser Erstarrungsvorgang kann durch die zusätzliche Kühlung mittels des Kühlkanals 22 beschleunigt werden. Ab dem Zeitpunkt der Erstarrung wird durch die weiterhin laufende Vakuumpumpe (siehe Fig. 4, Diagramm I) ein Unterdruck im Meßkanal 16 erzeugt und mittels des Druckaufnehmers 21 gemessen. Dieser Druckabfall ist in Fig. 4 im Diagramm II im Punkt 31 angegeben. Meldet der Druckaufnehmer 21 eine geringe Veränderung des Druckes p₁ auf einen niedrigeren Wert als 1 bar (Punkt 32), wird zum Zeitpunkt t₃ ein Schaltsignal 33 ausgelöst, das z. B. für die Festlegung der Umschaltpunkte zwischen Vorfüllphase und Formfüllphase verwendet werden kann. Dieses Schaltsignal ist in Fig. 4 im Diagramm III mit dem Schaltzustand 0 = Aus und Schaltzustand 1 = Ein bzw. den Bezugszeichen 36, 37 dargestellt. Durch den Verschluß des Meßkanals 16 durch die Schmelzefront wird demnach ein Druckabfall vom Druck p₁ 1 bar auf einen Druck p₂ 0,2 bar erzeugt, der mittels des Druckaufnehmers 21 erfaßbar ist und zum Schaltsignal 33 führt. Ist dieser Zustand erreicht, kann zum Zeitpunkt t₄ die Vakuumpumpe 20 ausgeschaltet werden. Dies ist im Diagramm I in Fig. 4 zum Zeitpunkt t₄ dargestellt. Der Aus-Zustand ist mit Bezugszeichen 34, der Ein-Zustand der Vakuumpumpe 20 mit Bezugszeichen 35 dargestellt.

Die Vakuumpumpe 20 wird zweckmäßigerweise möglichst in der Nähe des Meßkanals 16 angeordnet, damit die Schaltzeiten minimiert werden können. Auch die zusätzliche Anordnung des Kühlkanals 22 zur Erzielung einer Erstarrung der Schmelzefront innerhalb der Meßkammer 30 bzw. des Meßkanals 16 dient zur Verbesserung des Betriebs der Meßeinrichtung und insbesondere zur Verringerung der Zeitspanne zwischen dem Erreichen der Schmelzefront am Meßkanal 16 und der Auslösung des zugehörigen Meßsignals. Auch kann der zusätzliche Temperaturfühler 24 entsprechende Meßsignale zur Regelung der Temperatur im Meßkanal liefern.

Das vorgeschlagene Meßsystem kann selbstverständlich auch an anderen Stellen in der Druckgießform eingesetzt werden, wobei es insbesondere auf das Erkennen der Lage der Schmelzefront innerhalb des Gießsystems ankommt. Darüber hinaus läßt sich das Meßsystem auch bei einer Druckgießmaschine mit einer Schmelze-Vakuumansaugung einsetzen. Hierbei müssen allerdings die Schaltschwellen des Druckaufnehmers auf den in der Form aufgebrachten Unterdruck zur Formfüllung eingestellt werden. Ein Druckdifferenzsignal dient dann zur Steuerung anderer Systeme.

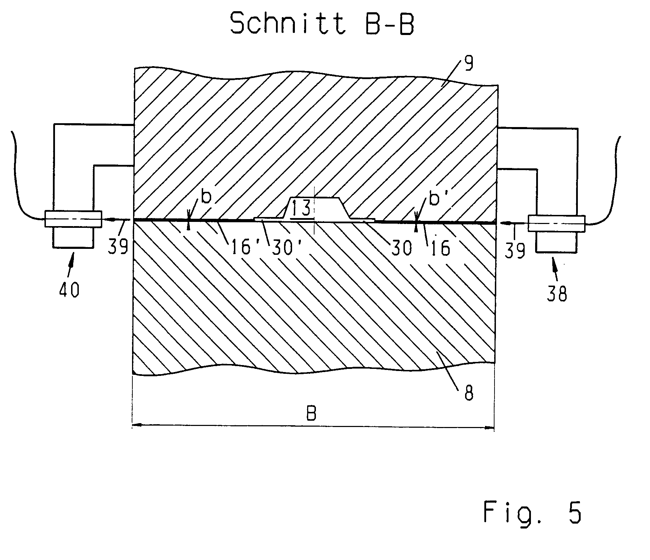

In der Fig. 5 ist ein alternatives Ausführungsbeispiel der Erfindung dargestellt. In diesem Fall erstreckt sich ein als Meßspalt 16 ausgebildeter Meßkanal mit einer Stärke b 0,2 mm über die gesamte Breite B der Druckgießform 7. Der Angußkanal 13 in der beweglichen Formhälfte 9 weist beidseitig eine Meßkammer 30, 30' auf, die zu einem beidseitig vorhandenen Meßkanal 16, 16' mit einer Stärke b 0,2 mm führt. Hierdurch kann mittels eines Signalgebers 38 ein Meßsignal 39 in den Spalt 16 von außen eingegeben werden, der auf der anderen Seite der Druckgießform 7 von einem Signalempfänger 40 aufgenommen wird. Diese Meßanordnung befindet sich wiederum in der Meßhöhe 29 wie zu Fig. 2 und 3 beschrieben. Beim Ansteigen der Metallschmelze im Angußkanal 13 werden die den Meßspalt bildenden, horizontal verlaufenden Quernuten 16, 16' in der beweglichen Formhälfte 9 durch das erstarrende Metall wiederum verschlossen, so daß der Meßstrahl 39 unterbrochen wird. Der Signalempfänger 40 kann sodann wiederum ein Schaltsignal 33 gemäß der zuvor beschriebenen Ausführungsform erzeugen.

Als Meßeinrichtungen im Ausführungsbeispiel nach Fig. 5 können verschiedene durchstrahlende Sensoren verwendet werden. Dies können beispielsweise Ultraschallsensoren mit einem Ultraschallsender und einem Ultraschallempfänger sein. Selbstverständlich können auch Fotodioden und Lichtschranken zur Erzeugung und Empfang eines Lichtstrahls oder entsprechende Lasersende- und -empfangseinrichtungen für einen Laserstrahl verwendet werden. Mittels einer solchen Abtastung des Füllstandes der Schmelzefront kann der genaue Zeitpunkt des Überschreitens der Meßhöhe durch die Schmelzefront ermittelt werden. Dabei sind die Signalgeber 38 und der Signalempfänger 40 genauestens auf die Quernuten 16, 16' als Meßkanäle eingestellt.

Das in den Meßspalten bzw. -kanälen 16, 16' erstarrte Metall wird ohne besondere Auswerfvorrichtung beim Ausschieben des Gießrestes automatisch mitentfernt. Hierdurch ergibt sich eine sehr einfache Handhabung der Meßeinrichtung.

Die Erfindung ist nicht auf das dargestellte und beschriebene Ausführungsbeispiel beschränkt. Sie umfaßt auch vielmehr alle fachmännischen Weiterbildungen im Rahmen der Ansprüche. Insbesondere kann die erfindungsgemäße Meßeinrichtung sowohl bei metallverarbeitenden Druckgieß- als auch bei kunststoffverarbeitenden Spritzgießmaschinen Anwendung finden.

## Patentansprüche

1. Druck- oder Spritzgießmaschine mit einer Einrichtung zur Erfassung der Schmelzefront des Gießmaterials, mit einer feststehenden sowie einer beweglichen Formhälfte mit darin gegebenenfalls enthaltenem Angußkanal und Formhohlraum, wobei die Schmelze mittels eines Gießkolbens über den Angußkanal in den Formholraum der Gießform einpreßbar und die Lage der Schmelzefront mittels einer Sensoreinrichtung erfaßbar ist, dadurch gekennzeichnet, daß die Meßhöhe (29) der Schmelzefront (15) vor dem Formhohlraum (6) angeordnet ist und daß die Sensoreinrichtung einen quer zur Transportrichtung der Schmelze verlaufenden dünnen Meßkanal oder Meßspalt (16, 16') umfaßt, dessen Durchgang durch die ansteigende Schmelzfront (15) verschlossen werden kann, wodurch die außerhalb dem Meßkanal oder Meßspalt (16, 16') angeordnete Sensoreinrichtung ein Meßsignal zur Steuerung und/oder Regelung der Maschinenparameter erzeugt.

2. Maschine nach Anspruch 1, dadurch gekennzeichnet, daß ein dünner, als horizontale Quernut ausgebildeter Meßkanal (16) vorgesehen ist, dem eine Vakuumeinrichtung (20) zur Unterdruck-Beaufschlagung zugeordnet ist, und daß aufgrund des Eindringens eines Teils der Schmelzefront (15) in den Meßkanal (16) mittels einer Druckmeßeinrichtung (21) ein Drucksignal (32) als Steuersignal (33) erzeugbar ist.

3. Maschine nach Anspruch 1 oder 2, dadurch gekennzeichnet, daß der Meßkanal (16, 16') in die bewegliche oder feste Formhälfte (9) der Druckgießform (7) eingebracht ist.

4. Maschine nach Anspruch 1, dadurch gekennzeichnet, daß der Meßkanal (16, 16') im Bereich des Angußkanals (13) angeordnet ist.

5. Maschine nach einem der vorhergehenden Ansprüche, dadurch gekennzeichnet, daß zwischen dem Angußkanal (13) und dem Meßkanal (16, 16') eine Meßkammer (30) zur Schmelzenansammlung vorgesehen ist.

6. Maschine nach einem der vorhergehenden Ansprüche, dadurch gekennzeichnet, daß im Bereich der horizontal verlaufenden Quernut oder des Meßkanals (16, 16') eine Kühlungseinrichtung (22) und vorzugsweise ein Kühlkanal (22) sowie vorzugsweise eine Temperaturmeßeinrichtung (24, 25) vorgesehen sind.

7. Maschine nach Anspruch 1, dadurch gekennzeichnet, daß die Sensoreinrichtung eine horizontale, dünne Quernut (16') als Meßspalt oder Meßkanal umfaßt, die mit einem Signalgeber (38) auf einer Seite und einem Signalempfänger (40) auf der anderen Seite der Druckgießform (7) bestückt ist und daß ein Durchgangssignal (39) durch die Druckgießform (7) erzeugbar ist, welches durch das Erreichen der Schmelzefront (15) in der Meßhöhe (29) im Sinne einer Signalerzeugung unterbrechbar ist.

8. Maschine nach Anspruch 7, dadurch gekennzeichnet, daß als Signalübermittlung eine Ultraschalleinrichtung oder ein Lichtstrahl mit Fotodiode und Lichtschranke oder eine Laserstrahleinrichtung jeweils mit Sende- und Empfangseinrichtung Verwendung findet.

9. Verfahren zur Erfassung der Schmelzefront des Gießmaterials an einer Druck- oder Spritzgießmaschine, mit einer feststehenden sowie einer beweglichen Formhälfte mit darin enthaltenem Angußkanal und Formhohlraum, wobei die Schmelze mittels eines Gießkolbens über den Angußkanal in den Formhohlraum der Gießform eingepreßt und die Lage der Schmelzefront mittels einer Sensoreinrichtung erfaßt wird, dadurch gekennzeichnet, daß die Meßhöhe (29) der Schmelzefront (15) insbesondere im Bereich des Angußkanals (13) vor dem Formhohlraum (6) angeordnet wird und daß ein quer zur Transportrichtung der Schmelze verlaufender dünner Meßkanal oder Meßspalt (16, 16') vorgesehen wird, dessen Durchgang durch die ansteigende Schmelzefront (15) verschlossen wird und hierdurch ein Meßsignal zur Steuerung und/oder Regelung der Maschinenparameter erzeugt.

10. Verfahren nach Anspruch 9, dadurch gekennzeichnet, daß in den als dünne horizontale Quernut ausgebildeten Meßkanal (16) ein Teil der Schmelzefront (15) eindringt, dort erstarrt und daß mittels einer Vakuumeinrichtung (20) durch Unterdruck ein Drucksignal (32) als Steuersignal (33) erzeugt wird.

11. Verfahren nach Anspruch 9, dadurch gekennzeichnet, daß im Bereich der horizontal verlaufenden Quernut oder des Meßkanals (16, 16') die Schmelzefront mittels einer Kühlungseinrichtung (22) gekühlt wird, wobei vorzugsweise eine Temperaturmeßeinrichtung (24, 25) zur Temperaturerfassung der Schmelze vorgesehen ist.

12. Verfahren nach Anspruch 9, dadurch gekennzeichnet, daß die Sensoreinrichtung eine horizontale, dünne Quernut (16, 16') als Meßspalt umfaßt, die mit einem Signalgeber (38) auf einer Seite und einem Signalempfänger (40) auf der anderen Seite der Druckgießform (7) bestückt ist und daß ein Durchgangssignal (39) durch die Druckgießform (7) vorgesehen ist, welches durch das Erreichen der Schmelzefront (15) in der Meßhöhe (29) im Sinne einer Signalerzeugung unterbrochen wird.

13. Verfahren nach Anspruch 12, dadurch gekennzeichnet, daß als Signalübermittlung eine Ultraschalleinrichtung oder ein Lichtstrahl mit Fotodiode und Sichtschranke oder eine Laserstrahleinrichtung jeweils mit Sende- und Empfangseinrichtung verwendet wird.

## Claims

1. Diecasting or injection moulding machine with a device for detecting the melt front of the cast material, with one stationary and one moving mould half with a runner optionally contained therein and mould cavity, wherein the melt can be injected by an injection piston via the runner into the mould cavity of the mould and the position of the melt front can be detected by means of a sensor, characterised in that the measured height (29) of the melt front (15) is arranged in front of the mould cavity (6) and in that the sensor comprises a measuring duct or measuring gap (16, 16') which extends transversely to the conveying direction of the melt and of which the passage can be closed by the rising melt front (15) so the sensor arranged outside the measuring duct or measuring gap (16, 16') generates a measurement signal for the open and/or closed loop control of the machine parameters.

2. Machine according to claim 1, characterised in that a thin measuring duct (16) is provided which is designed as a horizontal transverse groove and is allocated a vacuum system (20) for evacuation purposes and in that a pressure signal (32) can be generated as control signal (33) by means of a pressure measuring device (21) on the basis of the penetration of a proportion of the melt front (15) into the measuring duct (16).

3. Machine according to claim 1 or 2, characterised in that the measuring duct (16, 16') is introduced into the moving or stationary mould half (9) of the diecasting mould (7).

4. Machine according to claim 1, characterised in that the measuring duct (16, 16') is arranged in the region of the runner (13).

5. Machine according to one of the preceding claims, characterised in that a measuring chamber (30) for the collection of melt is provided between the runner (13) and the measuring duct (16, 16').

6. Machine according to one of the preceding claims, characterised in that a cooling arrangement (22) and preferably a cooling duct (22) and preferably a temperature measuring device (24, 25) are provided in the region of the horizontally extending transverse groove or of the measuring duct (16, 16').

7. Machine according to claim 1, characterised in that the sensor comprises, as measuring gap or measuring duct, a horizontal thin transverse groove (16') which is equipped with a signal generator (38) on one side and a signal receiver (40) on the other side of the diecasting mould (7) and in that a passage signal (39) can be generated by the diecasting mould (7) and can be interrupted in the sense of signal generation when the melt front (15) reaches the measured height (29).

8. Machine according to claim 7, characterised in that an ultrasonic device or a light beam with photodiode and light barrier or a laser beam device with a respective transmitter and receiver is used as signal transmission means.

9. Method of detecting the melt front of the cast material on a diecasting or injection moulding machine with a stationary and a moving mould half with runner and mould cavity contained therein, wherein the melt is injected via the runner into the mould cavity of the casting mould by means of an injection piston and the position of the melt front is detected by a sensor, characterised in that the measured height (29) of the melt front (15) is arranged, in particular in the region of the runner (13), in front of the mould cavity (6) and in that a thin measuring duct or measuring gap (16, 16') is provided which extends transversely to the conveyance direction of the melt, of which the passage is closed by the rising melt front (15) and thus generates a measurement signal for the open and/or closed loop control of the machine parameters.

10. Method according to claim 9, characterised in that a proportion of the melt front (15) penetrates into the measuring duct (16) designed as a thin horizontal transverse groove, solidifies there and in that a pressure signal (32) is generated as control signal (33) by vacuum by means of a vacuum system (20).

11. Method according to claim 9, characterised in that the melt front is cooled by means of a cooling arrangement (22) in the region of the horizontally extending transverse groove or the measuring duct (16, 16'), a temperature measuring device (24, 25) preferably being provided to detect the temperature of the melt.

12. Method according to claim 9, characterised in that the sensor device comprises as measuring gap a horizontal thin transverse groove (16, 16') which is equipped with a signal generator (38) on one side and a signal receiver (40) on the other side of the diecasting mould (7) and in that a passage signal (39) is provided by the diecasting mould (7) and is interrupted in the sense of signal generation when the melt front (15) reaches the measured height (29).

13. Method according to claim 12, characterised in that an ultrasonic device or a light beam with photodiode and light barrier or a laser beam device with a respective transmitter and receiver is used as signal transmission means.

## Revendications

1. Machine de coulée par injection ou sous pression, comportant un dispositif pour détecter le front de matière en fusion de la matière de coulée, une moitié de moule fixe, ainsi qu'une moitié de moule mobile contenant, le cas échéant, un canal de coulée et une cavité de moule, la matière en fusion pouvant être pressée, au moyen d'un piston de coulée, par l'intermédiaire du canal de coulée, dans la cavité du moule de coulée et la position du front de la matière en fusion pouvant être détectée au moyen d'un dispositif à capteur,
caractérisée en ce que la hauteur de mesure (29) du front de la matière en fusion (15) est prévue avant la cavité du moule (6), et en ce que le dispositif à capteur comporte une fente de mesure ou canal de mesure mince (16, 16') s'étendant transversalement à la direction de transport de la matière en fusion, dont le passage peut être obturé par le front montant de la matière en fusion (15), grâce à quoi le dispositif à capteur agencé à l'extérieur du canal de mesure ou de la fente de mesure (16, 16') engendre un signal de mesure pour commander et/ou régler les paramètres de machine.

2. Machine selon la revendication 1,
caractérisée en ce qu'il est prévu un canal de mesure mince (16), réalisé comme rainure transversale horizontale, auquel est associé un dispositif à vide (20) pour une sollicitation en dépression, et en ce que, en raison de la pénétration d'une partie du front de la matière en fusion (15) dans le canal de mesure (16), il peut être engendré, au moyen d'un dispositif de mesure de pression (21), un signal de pression (32) comme signal de commande (33).

3. Machine selon la revendication 1 ou 2,
caractérisée en ce que le canal de mesure (16, 16') est agencé dans la moitié de moule mobile ou la moitié de moule fixe (9) du moule de coulée sous pression (7).

4. Machine selon la revendication 1,
caractérisée en ce que le canal de mesure (16, 16') est agencé dans la zone du canal de coulée (13).

5. Machine selon une des revendications précédentes,
caractérisée en ce que, entre le canal de coulée (13) et le canal de mesure (16,16'), il est prévu une chambre de mesure (30) pour accumuler la matière en fusion.

6. Machine selon une des revendications précédentes,
caractérisée en ce que, dans la zone de la rainure transversale s'étendant horizontalement ou du canal de mesure (16,16'), sont prévus un dispositif de refroidissement (22) et, avantageusement, un canal de refroidissement (22) ainsi que, avantageusement, un dispositif de mesure de température (24,25).

7. Machine selon la revendication 1,
caractérisée en ce que le dispositif à capteur comporte une rainure transversale mince horizontale (16') comme fente de mesure ou canal de mesure, qui est équipée d'un émetteur de signaux (38) d'un côté et d'un récepteur de signaux (40) de l'autre côté du moule de coulée sous pression (7), et en ce qu'un signal de passage (39) à travers le moule de coulée sous pression (7) peut être engendré, lequel peut être interrompu lorsque le front de la matière en fusion (15) atteint la hauteur de mesure (29) dans le sens d'une génération de signal.

8. Machine selon la revendication 7,
caractérisée en ce que, comme transmission de signaux, on utilise un dispositif à ultrasons ou un rayon lumineux à diode photoélectrique et barrage photoélectrique, ou un dispositif à rayon laser, à chaque fois avec un dispositif d'émission et un dispositif de réception.

9. Procédé pour détecter le front de matière en fusion de la matière de coulée dans une machine de coulée par injection ou sous pression, comportant une moitié de moule fixe, ainsi qu'une moitié de moule mobile contenant un canal de coulée et une cavité de moule, la matière en fusion étant pressée, au moyen d'un piston de coulée, par l'intermédiaire du canal de coulée, dans la cavité du moule de coulée et la position du front de la matière en fusion étant détectée au moyen d'un dispositif à capteur,
caractérisé en ce que la hauteur de mesure (29) du front de la matière en fusion (15) est prévue en particulier dans la zone du canal de coulée (13) avant la cavité du moule (6), et en ce qu'une fente de mesure ou un canal de mesure mince (16,16') s'étendant transversalement à la direction de transport de la matière en fusion est prévu, dont le passage est obturé par le front montant de la matière en fusion (15) et, ainsi, un signal de mesure est engendré pour commander et/ou régler les paramètres de machine.

10. Procédé selon la revendication 9,
caractérisé en ce que, dans le canal de mesure (16) réalisé comme rainure transversale horizontale mince, une partie du front de la matière en fusion (15) pénètre, s'y solidifie, et en ce que, au moyen d'un dispositif à vide (20), un signal de pression (32) est engendré comme signal de commande (33), par dépression.

11. Procédé selon la revendication 9,
caractérisé en ce que, dans la zone de la rainure transversale s'étendant horizontalement ou du canal de mesure (16,16'), le front de la matière en fusion est refroidi au moyen d'un dispositif de refroidissement (22), un dispositif de mesure de température (24,25) étant avantageusement prévu pour détecter la température de la matière en fusion.

12. Procédé selon la revendication 9,
caractérisé en ce que le dispositif à capteur comporte une rainure transversale mince horizontale (16,16') comme fente de mesure, qui est équipée d'un émetteur de signaux (38) d'un côté et d'un récepteur de signaux (40) de l'autre côté du moule de coulée sous pression (7), et en ce qu'un signal de passage (39) à travers le moule de coulée sous pression (7) est prévu, lequel est interrompu lorsque le front de la matière en fusion (15) atteint la hauteur de mesure (29) dans le sens d'une génération de signal.

13. Procédé selon la revendication 12,
caractérisé en ce que, comme transmission de signaux, on utilise un dispositif à ultrasons ou un rayon lumineux à diode photoélectrique et barrage photoélectrique, ou un dispositif à rayon laser, à chaque fois avec un dispositif d'émission et un dispositif de réception.
